Europäisches Patentamt

European Patent Office

Office européen des brevets

(11) Publication number: **0 474 168 B1**

# EUROPEAN PATENT SPECIFICATION

(45) Date of publication of patent specification: **21.06.95**   (51) Int. Cl.⁶: **F02M 59/36**, F02M 47/00,
F02M 47/02

(21) Application number: **91114779.1**

(22) Date of filing: **02.09.91**

(54) **High pressure fuel injection system for an internal combustion engine.**

(30) Priority: **31.08.90 JP 230115/90**
**10.09.90 JP 239343/90**

(43) Date of publication of application:
**11.03.92 Bulletin  92/11**

(45) Publication of the grant of the patent:
**21.06.95 Bulletin  95/25**

(84) Designated Contracting States:
**DE FR GB IT**

(56) References cited:
**EP-A- 0 243 871      DE-C- 3 147 467**
**FR-A- 765 315        FR-A- 2 610 674**
**GB-A- 2 091 805      GB-A- 2 165 895**

(73) Proprietor: **YAMAHA HATSUDOKI KABUSHIKI KAISHA**
**2500 Shingai**
**Iwata-shi**
**Shizuoka-ken, 438 (JP)**

(72) Inventor: **Yoshida, Takeo**
**3643-27, Nishikaizuka**
**Iwata-shi,**
**Shizuoka-ken (JP)**
Inventor: **Nakamura, Yoshikazu**
**359-10, Takaoka-cho**
**Hamamatsu-shi,**
**Shizuoka-ken (JP)**
Inventor: **Suzuki, Minoru**
**301 No. 2 Parkside-mansion, 19 Kitazima-cho**
**Hamamatsu-shi,**
**Shizuoka-ken (JP)**
Inventor: **Hirai, Ryoichi**
**2926-4, Shimotaruki**
**Kakegawa-shi,**
**Shizuoka-ken (JP)**
Inventor: **Suzuki, Takahiro**
**105-11, Tennou-cho**
**Hamamatsu-shi,**
**Shizuoka-ken (JP)**

(74) Representative: **Patentanwälte Grünecker,**
**Kinkeldey, Stockmair & Partner**
**Maximilianstrasse 58**
**D-80538 München (DE)**

## Description

The present invention relates to a high pressure fuel injection system for an internal combustion engine and more particular to an improved arrangement for controlling the amount of fuel supplied by the fuel injector of the system to an internal combustion engine, as is indicated in the preamble of claim 1.

The advantages of fuel injection for internal combustion engines are well known. One particularly popular type of fuel injector is the so called "accumulator type" in which fuel is supplied to the injector under pressure and then is injected when the injection valve is opened. This type of injector is extremely efficient and advantageous. However, the amount of fuel required per injection cycle varies widely with engine running conditions such as speed and load. Even the accumulator type of fuel injector can have some difficulties in providing the appropriate fuel control under all running conditions.

There is disclosed in United States Letters Patent 4,969,442, entitled High Pressure Fuel Injection Device For Engine, issued November 13, 1990 and assigned to the assignee hereof, an arrangement for controlling the amount of fuel supplied by an accumulator type of injector through varying the pressure at which the fuel is delivered to the injector. Varying the pressure at which the fuel is supplied to the injector is more effective, under some conditions, than varying the duration of injection so as to control the amount of fuel supplied. In the construction shown in US-A-4,969,442 the pressure of the fuel supplied to the injector is varied by varying the phase of the injector or high pressure pump. Although this method is highly effective, it does require a mechanical adjustment of the phase of the pump and can, in some regards, be more costly than desirable.

Moreover, a high pressure fuel injection system as indicated in the preamble of claim 1 is known from EP-A-243 871 providing a pressure-reducing valve controlling a relief passageway upstream of a fuel delivery valve. For a more elaborated control of the supply of fuel in nowadays engines further improvements of such relief control systems are desirable.

It is therefore, a principal object of this invention to provide an improved arrangement for a high pressure fuel injection system as indicated above for controlling pressure of the fuel supplied to a fuel injection so as to control the amount of fuel injected per injection cycle.

Moreover, it should be assured to provide an appropriate amount of fuel even when the control mechanism fails to operate completely correct, creating a sufficiently large fuel pressure during starting of the engine and also at maximum load condition.

In order to achieve the afore-noted objective the present invention comprises a high pressure fuel injection system for an internal combustion engine as indicated above which comprises a first pressure reducing value controlling a relief passageway branching off from said conduit means downstream of the delivery check valve and a second pressure-reducing valve controlling another release passage of the conduit means branching off from a bore which slideably receives a plunger of the high pressure fuel injection pump at a point intermediate the ends of the stroke of the plunger, said first and second pressure-reducing valves being operated in response to engine running characteristics by means of a control unit.

Further preferred embodiments of the present invention are apparent from the further subclaims.

In the following the present invention is explained in greater detail by means of an embodiment thereof including a control method either, wherein:

Figure 1 is a partially schematic view of the fuel injection system of a internal combustion engine constructed in accordance with an embodiment of the invention.

Figure 2 is an enlarged view showing the injection pump system, partially in cross section, and its relationship to the injector.

Figure 3 is a further enlarged cross sectional view of the pressure controlling valve of the high pressure pump.

Figure 4 is a cross sectional view taken along the line 4-4 of Figure 2.

Figure 5 is an enlarged cross sectional view taken through the fuel injector and shows its relationship to the pumping system in phantom.

Figures 6, 7 and 8 are cross sectional views taken through the discharge nozzle portion of the injector in, respectfully, a closed, partially opened and fully opened condition.

Figures 9, 10 and 11 are graphical views showing the drive pulses for the injector valve issued from the micro computer in response to different running conditions.

Figures 12, 13 and 14 are graphical views showing the valve lift in relation to time for each of the pulse patterns shown in Figures 9 through 11, respectfully.

Figure 15 is a graphical view showing the optimum voltage signal representative of the optimum fuel pressure supplied to the fuel injector according to the current engine operating condition based upon varying engine speeds and loads.

Figure 16 is a graphical view showing optimum fuel pressure according to current engine operating condition based upon varying speeds and engine loads.

Figure 17 is a block diagram showing the routine of computer processing for controlling the fuel pressure.

Figure 18 is a diagram showing the relationship between reference and detected voltages with respect to the drive pulse issued from the micro computer.

Figure 19 is graphical view showing optimum energization duration for the electro magnet of the fuel injector according to current engine operating condition in relation to varying engine loads and engine speeds.

Figure 20 is a graphical view showing the relationship between fuel pressure and fuel injection rate.

Figure 21 is an enlarged cross sectional view of a portion of the injection pump showing another portion of the arrangement for controlling the amount of fuel injected and the pressure thereof.

Figure 22 is a process flow chart showing the operation of the valve in Figure 21.

Figure 23 is a graphical view showing the amount of fuel discharged in relation to the stroke of the plunger when the control valve shown in Figure 21 is operated.

Figure 24 shows a micro processor flow chart, in part similar to Figure 22, showing another embodiment of the invention.

Figure 25 is a graphical view showing the control ranges within this embodiment in relation to varying engine speed and engine load.

Figure 26 is a graphical view, in part, similar to a portion of the graph of Figure 18 in accordance with yet another embodiment of the invention.

Figure 27 is a graphical view showing the effect of the hysterisis in this embodiment.

Figure 28 is a view, in this embodiment, showing the relationship between pulse duration and time of sensing pressure for determining the duty cycle.

Values of duty 0% and 100% are defined with adding a certain value on and deducting a certain value from the standard voltage.

Now a value "A" is defined as duty 0%.

And a value "B" is defined as duty 100%.

Further, a voltage value senses at time "$t_1$ is defined "a".

Method for determining duty value:

$$\frac{a - A}{B - A} \times 100 = \text{Duty value}$$

A period of sensing pressure "t" is predetermined, for example, synchronous to the engine rotation or to a computer clock pulse in the CPU 48.

$$A \text{ pulse duration "d"} = \text{"t"} \times \frac{\text{Duty value}}{100}$$

## DETAILED DESCRIPTION OF THE PREFERRED EMBODIMENTS OF THE INVENTION

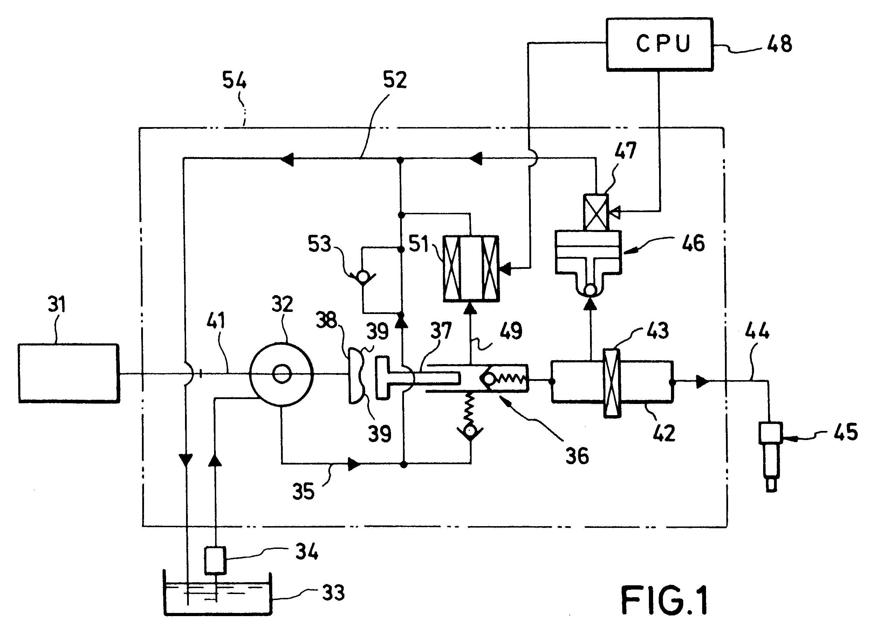

Referring now in detail to the drawings and initially to Figure 1, a fuel injection system for an internal combustion engine, indicated generally by the reference numeral 31 is shown partially schematically. The engine 31 is, in a preferred form of the invention, a multi-cylinder internal combustion engine operating on a diesel principal either of the four or two stroke type. Although the invention is described in connection with such an engine, it should be readily apparent to those skilled in the art that the invention may also be employed with other types of engines operating on other cycles including rotary engines and spark ignited engines.

The engine 31 drives a pump arrangement including a low pressure pump 32 that draws fuel from a fuel tank 33 through a conduit including a filter 34. The low pressure pump 32 outputs fuel under pressure through a low pressure line 35 to a high pressure piston type pump, indicated generally by the reference numeral 36. The piston pump 36 includes a plunger 37 that is operated by a cam 38 which rotates with the shaft of the low pressure pump 32 and which has a number of lobes 39 equal to the number of cylinders of the engine 31 so that the high pressure pump 36 will output a pressure pulse for each cylinder during a single rotation of the pump shaft, indicated schematically at 41.

The high pressure pump 36 outputs its pressure to a chamber 42 in which a filter element 43 is provided. The pressure chamber 42 communicates through a plurality of conduits 44 with individual accumulator type injectors 45, one for each cylinder of the engine.

In accordance with a feature of the invention, the pressure of the fuel delivered to the accumulator type injector 45 is controlled by a pressure regulating relief valve, shown schematically at 46 so as to vary the amount of fuel supplied to the engine by the injector 45 during each cycle of its operation. The pressure is controlled by means that includes solenoid 47 which is controlled by a CPU 48.

The amount of fuel supplied may also be controlled by means of a release passageway 49 in which a solenoid control release valve 51 is provided. Both the release passageway 49 and the pressure control release valve 46 control pressure by bypassing fuel back to the tank 33 through a return line 52.

There is also provided a pressure relief valve 53 in the conduit 35 that connects the low pressure pump 32 with the high pressure pump 36 for providing pressure relief in this circuit.

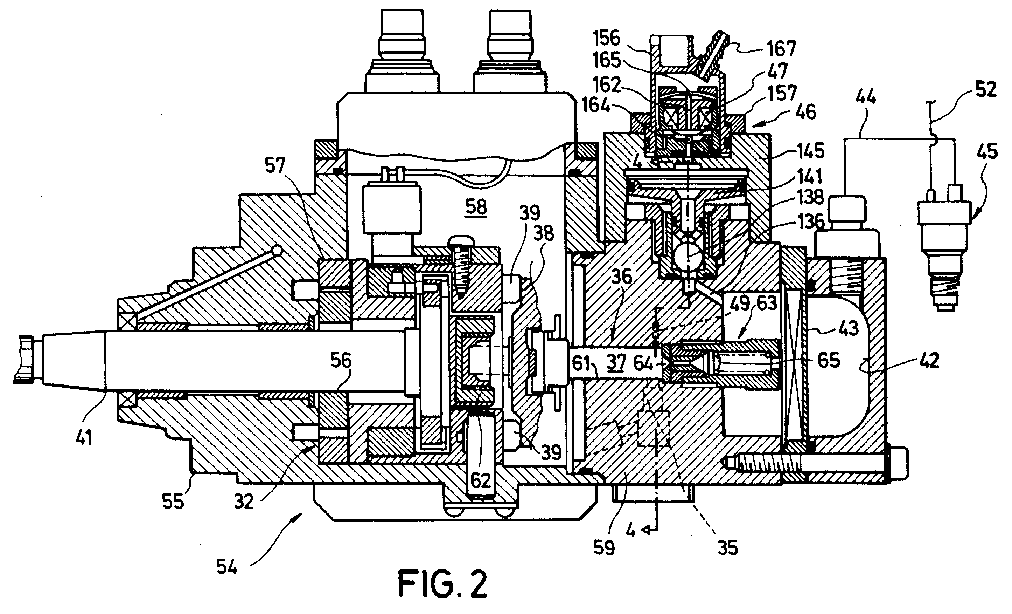

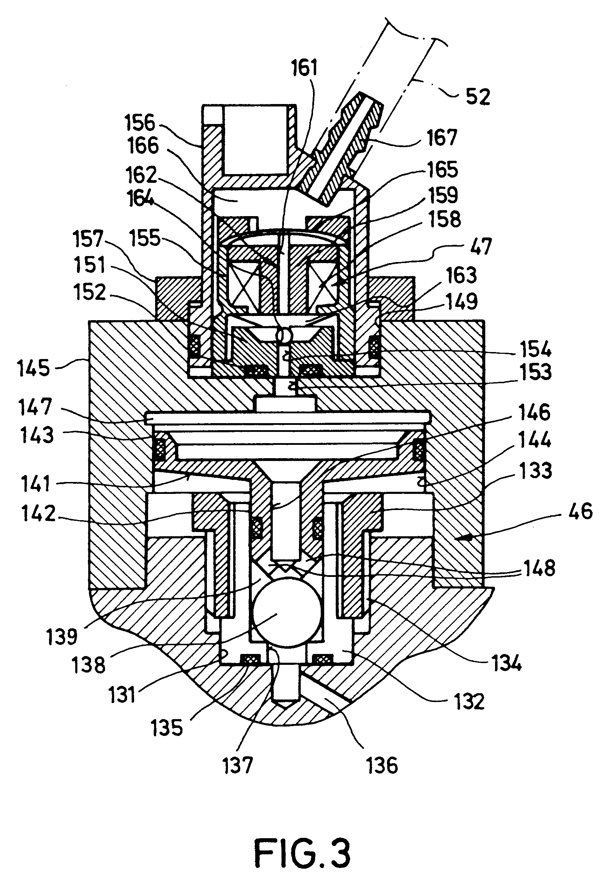

In accordance with a feature of the invention, the low pressure pump 32, high pressure pump 36, pressure chamber 42, pressure control valve 46 and bypass control valve 51 are all formed within a single housing, shown schematically by the reference numeral 54 in Figure 1 and which is shown more detail Figures 2 through 4. Providing all of these components in a single housing assembly, it is possible to reduce the number of external circuits and conduits and, therefore, simplify the plumbing associated with the fuel injection system. This also reduces the liklihood of leaks and pressure losses in the system.

Referring now in detail to Figures 2 through 4, the housing assembly 54 includes an outer housing 55 in which the low pressure pump 32 is supported. The low pressure pump 32 is a gerotor type pump and includes an inner rotor 56 that is driven by the pump shaft 41 and which cooperates with an outer rotor 57 to supply pressurized fuel to a low pressure chamber 58 formed within the housing 55.

A plunger housing 59 closes the outer end of the chamber 58 and is affixed to the housing 55 in a suitable manner. The plunger housing 59 forms a portion of the high pressure pump 36 and defines a bore 61 in which the plunger 37 reciprocates. The passageway 35, previously referred, communicates the low pressure chamber 58 with the bore 61 for delivering fluid to the bore 61 above the plunger 37 when the plunger is at the down end of its stroke.

As may be best seen in this figure, the cam plate 38 is connected to the pump drive shaft 41 by means of a coupling 62 and the lobes 39 which effect the reciprocation of the cam plate 38 are clearly shown in this figure.

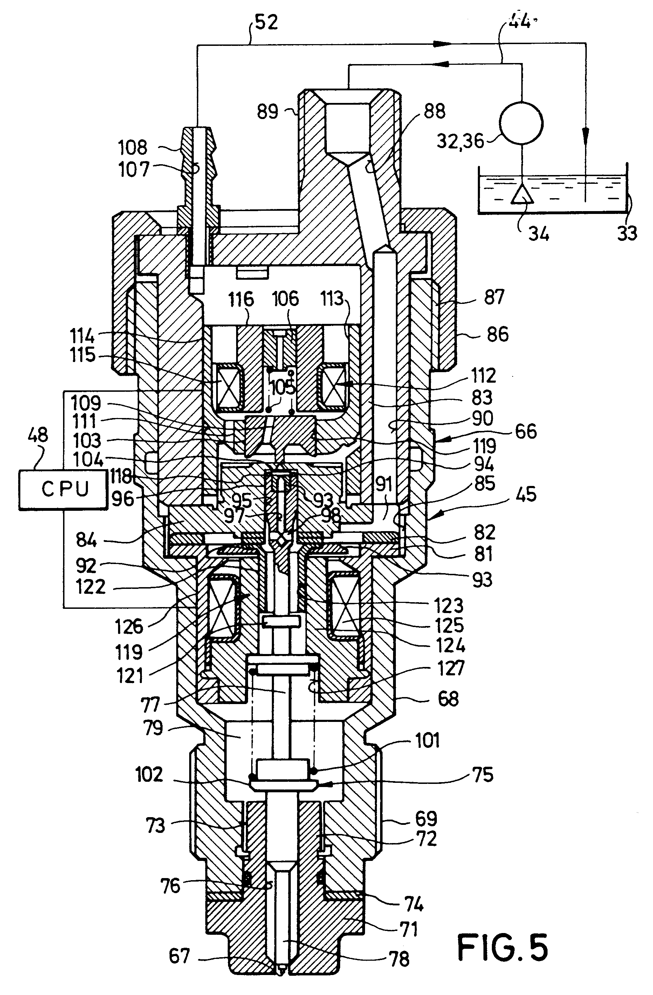

As the plunger 37 begins its pumping stroke, fuel is delivered under pressure to the upstream side of the filter 43 in the pressure chamber 42 through a delivery check valve, indicated generally by the reference numeral 63. The delivery check valve 63 communicates a delivery port 64 at the end of the pump cylinder 61 through a one way check valve 65. Fuel is then delivered, as aforenoted, through the delivery conduit 44 to the accumulator type injector nozzle 45, the construction of which is best shown in Figures 5 through 12.

Referring now initially to Figure 5, the injection nozzle 45 if comprised of an outer housing assembly, indicated generally by the reference numeral 66 that is adapted to be mounted, in a manner to be described, in the cylinder head of an internal combustion engine with a nozzle port 67 communicating with the combustion chamber for delivering fuel to it in a manner to be described. Rather than direct cylinder injection, the invention may be utilized in conjunction with manifold injection systems but the invention has particular utility with direct injection, for example as used with high speed diesel engines.

The outer housing 66 is comprised of a lower piece 68 that has a threaded lower end 69 that is adapted to be threaded into a suitable aperture in the cylinder head of the associated engine 31 in a known manner. The nozzle port 67 is defined by a tip 71 that has a threaded portion 72 that is received in a threaded bore 73 formed at the lower end of the housing piece 68. An adjusting shim 74 is interposed between the tip 71 and housing piece 68 for length adjustment.

An injection valve 75 is slidably supported within a bore 76 of the nozzle piece 71 and has a reduced diameter portion 77 and a flow controlling tip 78 configured as will be described and which, in the closed positions, closes the injection nozzle port 67. The valve portion 77 has interrupted enlargements for slidably supporting the injection valve 75 in the bore 76 in a known manner.

An accumulator chamber 79 is formed above the bore 76 by the housing piece 68. The accumulator chamber 79 is closed at its upper end by means of a closure plate 81 that is held by a spacer 82 received in a recess in the housing piece 68 by a second housing piece 83. The housing piece 83 engages a partition member 84 that is received within a bore 85 of the housing piece 68 so as to hold the closure plate 81 in position and maintain the chamber 79 in a sealed condition, except as is hereinafter noted. The housing piece 83 is retained relative to the housing piece 68 by means of a threaded cap 86 that is received on a threaded portion 87 at the upper end of the housing piece 68.

The housing piece 83 is formed with an inlet conduit 88 that has a threaded external portion 89 so as to receive a fitting for connecting the supply line 44 extending from the high pressure pump 36 to the inlet conduit 88.

The inlet conduit 88, which is generally a drilled opening, is intersected by a further drilled passageway 89 that extends axially along the housing piece 83 at one side thereof and which communicates at its lower end with a corresponding passage 91 in the partition member 84. The passageway 91 delivers fuel under pressure to the accumulator chamber 79 through a port 92 formed in a control stop armature 33. The function of the control stop armature 93 will be described later.

A control chamber 94 is formed in the partition member 84 by means of a bore 95 that opens through the lower end of the partition member 84. The injection valve 75 has a generally cylindrical actuator portion 96 that is slidably supported within the bore 95 and which closes the lower end of the control chamber 94. A passageway 97 formed in the actuation portion 96 intersects a bore 98 formed therein which pressurizes the control chamber 94, through a metering jet 99 and normally urges the injection valve 75 toward its downward or closed position.

A coil compression spring 101 encircles the injection valve 75 and bears against the housing assembly 66 in a manner to be described. The lower end of the spring 101 engages a shoulder formed by an enlargement 102 on the injection valve 75 so as to further assist in maintaining the injection valve 75 in the closed position as shown in Figure 5.

A relief valve 103 is supported in a means to be described within the housing assembly 65 above the upper end of the partition member 84 and controls the opening of a relief passage 104 formed in the upper end of the partition member 84. The relief valve 103 is normally biased to a closed position by means of a coil spring 105 the tension of which is adjusted by a screw 106.

The relief valve 103, when opened, will permit the fuel in the control chamber 94 to return to the tank 33 through a return passage 107 formed in a fitting 108 that extends axially through the end of the housing piece 83 parallel to the inlet passageway 88. The return passageway 107 communicates with the conduit 52.

Fuel can flow from the relief valve passageway 104 to the return passageway 107 through a passage 109 formed in the relief valve 103 and a port 111 formed in a yoke 114 of an electromagnetic assembly, indicated generally by the reference numeral 112. This yoke of the electromagnetic assembly 112 is suitably fixed in a bore 113 of the housing piece 83 so as to secure the electromagnetic assembly 112 in position.

The electromagnetic assembly 112 is comprised of a solenoid coil or winding 115 that is disposed in the yoke 114 and which encircles a core 116. The core 116 is formed with a threaded bore that supports the adjusting screw 106 of the relief valve 103. The core 116 coacts with the relief valve 103 for opening it when the winding 115 is energized. It should be noted that the relief valve 103 is slidably supported in a bore 117 of the yoke 114.

As should be readily apparent, energization of the solenoid winding 115 will attract the relief valve 103 so as to open the relief valve port 104 and deplete the pressure in the control chamber 94. This depletion in pressure will cause the pressure acting on the injection valve 75 to urge the injection valve 75 upwardly toward an open position compressing the spring 101 and causing an amount of fuel to be delivered. The full opening position of the injection valve 75 is controlled by means of a control shim 118 that is in position in the control chamber 94 and which will be engaged by the actuating portion 96 so as to limit the degree of maximum opening. As has been noted, with a system as thus far described, the only way the amount of fuel injected can be varied is by varying the pressure in the accumulator chamber 79 and/or the rate and time of opening of injection valve 75.

A control stop mechanism, indicated generally by the reference numeral 119 is provided in the accumulator chamber 79 below the partition member 84 and cooperates with a stop shoulder 121 on the injection valve 75 to control its degree of movement. This control stop mechanism 119 includes the armature 93 previously described and which has a cylindrical extension 122 that is receive within a bore 123 of a core 124 of a solenoid. A solenoid winding 125 encircles the core 124 and is held in place by means of a yoke 126 that is received within the upper end of the accumulator chamber 79. The closure member 81 is formed integrally within the yoke 126. The core 124 is provided with a counter bore 127 that receives the spring 101 as previously described.

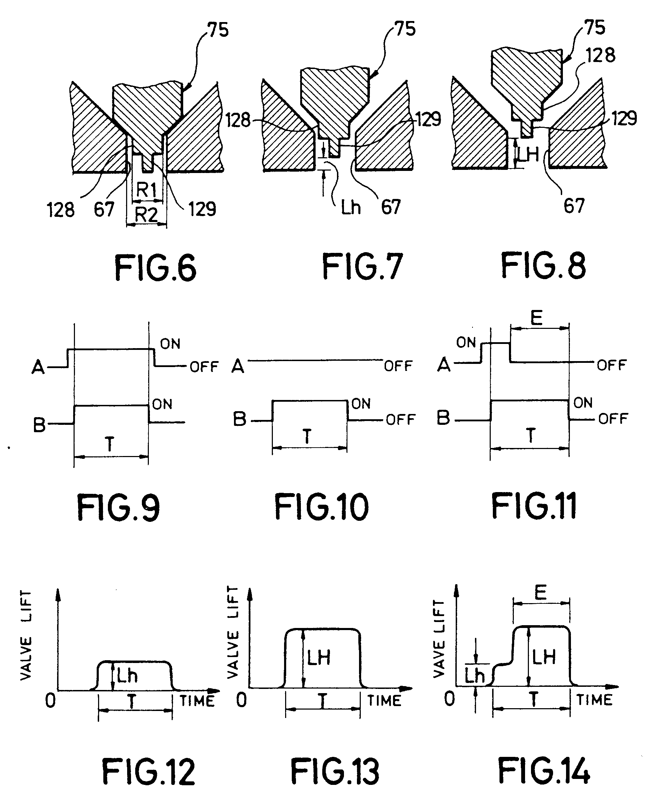

When the winding 125 is not energized, the armature 93 and its extension 122 may move to the upper position as shown in Figure 5 and energization of solenoid winding 115 will cause full reciprocal movement of the injection valve 75. However, when the winding 125 is energized, the armature 93 and extension 122 will be drawn downwardly so as to engage the shoulder 121 on the injection valve 75 and limit its upward movement. This operation will be discussed further in conjunction with Figures 6 and 14.

The CPU 48 may be programmed to provide a suitable control, an example of which will be described by reference to a Figure 9 through 14, provides the control strategy for actuating the winding 115 of the electromagnet 112 that controls the relief valve 103 and the winding 125 of the stop mechanism 119. In a typical example, the control mechanism 48 may receive input signals from a throttle position loan and an engine speed indicator.

Referring to Figure 6 through 8, as has been previously noted, the control tip portion 78 of the injection 75 is provided with a configured end so as to vary the amount of fuel supplied depending upon its position. For example, the end 78 is provided with a first, larger diameter cylindrical portion 128 and a second smaller diameter portion 129 that corporate with the nozzle port 67 so as to control the flow through it. Figure 6 shows the closed position, while Figure 7 shows the position for low fuel flow. In this position the solenoid wining 125 will be energized so as to limit the degree of opening of the injection 75 to the height Lh. In this position, the nozzle port 67 is open but the larger diameter portion 128 of the injection valve tip 75 will still be in position in the nozzle port 67 so as to limit the fuel delivery. The large diameter portion 128 has a diameter $R_1$ that is slightly smaller than the diameter $R_2$ of the nozzle port 67 to provide a controlled flow area to limit the amount of fuel delivery, as noted.

On the other hand, when the winding 125 is not energized the injection valve 75 may move fully open to the position shown in Figure 8 wherein the valve 75 moves through the distance LH. In this position, only the smaller diameter portion 129 will extend into the injection port 67 and substantially unrestricted fuel flow will be provided.

Referring now to Figure 9 through 14, one form of control strategy is depicted. For low engine speeds and when low fuel discharge is required, both the solenoid winding 125 is energized (pulse A) and the solenoid winding 115 is energized (pulse B) for the full time period T. When this occurs, the injection valve will move to the position shown in Figure 10 and provide a fuel discharge as shown in Figure 12. To achieve maximum fuel flow, only the solenoid winding 115 is energized and the solenoid winding 125 is not energized as shown in Figure 10. The injection valve 75 is then held in its fully open position LH for the time T so as to achieve maximum fuel discharge as shown in Figure 13.

Figures 11 and 14 show how intermediate speed and low ranges can be accommodated by providing full energization of the winding 115 for the time T and varying the energization of the winding 125 for varying time periods so as to provide an initially low opening of the injection 75 Lh and then a full opening LH for a variable time period E. By varying the relative times, the amount fuel delivered can be accurately controlled.

Referring to Figures 6 through 14, the fuel injection duration T is normally set in the range of crank angles of 20 to 24 degrees but may fall within the total range of 15 to 30 degrees. Thus, at the low load conditions as shown in Figures 7, 9 and 12, the duration T is generally fixed at approximately 20 degrees when both the electromagnets 125 and 115 are energized. Under the high load condition as shown in Figures 9, 10 and 13, when only the electromagnet is energized, the duration T is in the range of 20 to 24 degrees. In the mid range condition as shown in Figures 11 and 14, the duration period T is fixed at approximately 20 degrees of crankshaft rotation and the time E is varied in accordance with actual load. All this information is fed into the CPU 48 and the actual figures, as aforenoted, are derived from the mapping of it.

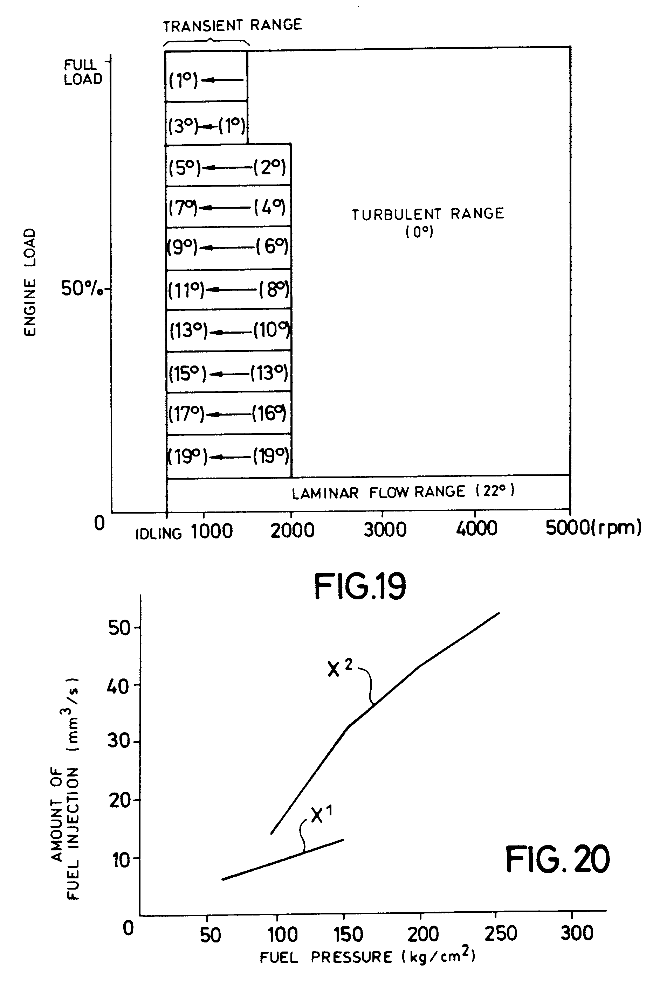

Figure 19 shows a map for deriving the lift amounts Lh and energization durations T and E optimum for operating conditions. The computer or CPU 48, based upon measured data, searches the chart to determine the appropriate fuel control depending upon the characteristics set forth (speed and load).

For example, under the condition where the engine is operating at 3,000 RPM and full load, the CPU 48 determines that the energization duration of the winding 125 is zero degrees and outputs a signal representing this energization duration to the winding 125. In other words, the winding 125 is not energized under this condition. In a like manner, if the engine is operating at 1500 RPM and medium load, the CPU 48 energizes the winding 125 for approximately 8 to 11 degrees of crank angle.

Over the operating condition of low load including idle and the entire engine range from idle to 5,000 RPM, the duration of energization of the winding 115 is fixed at 22 degrees as shown in Figure 19. This situation occurs when the solenoid 125 is energized so as to maintain the injection nozzle in the condition shown in Figures 7, 9 and 12 so as to insure laminar flow through the nozzle and less variance in flow rates.

Even if there is a change in ambient temperature so as to cause the viscosity of the fuel to change and the pressure of the fuel supplied to the fuel injector changes, the rate of change in fuel injection rate with respect to fuel pressure is kept low as shown by the curve X-1 in Figure 20 so that the engine speed remains well stabilized in the low revolution range including idling.

As the engine operates in shifts from low load to high load, high revolution where the fuel injection rate increases, the energization duration of the winding 125 will become zero and the injection valve 75 moves to the position shown in Figure 8 and the control is in the maximum lift duration. As a result, the amount of fuel flowing out of the nozzle opening 68 becomes turbulent and injection rate may be secured to meet the required fuel injection rate in the high low high revolution operating range as shown by the curve X-2 in Figure 20. To provide speed control, the CPU 48 can act to prevent energization of either of the windings 115 and 125 at the desired maximum speed, such as 5,000 RPM. This will stop fuel injection by returning the injection nozzle to the position shown in Figure 6.

Previously the relief valve 103 has been formed with a large annular disc shaped armature. However, this causes certain problems in that when the relief opening 104 is opened, any air which may be mixed with the fuel will be ejected into the chamber below the relief valve 103. If air finds its way into this area, then an air layer might be formed in the space between the valve and its core and the valve might not operate smoothly. However, in this embodiment since the relief valve 103 has a small diameter plunger type with less area facing the core 116, the probability of air bubbles entering this space is substantially reduced and the operation will be improved.

Except for the construction of the relief valve 103, the construction and operation of the injector 45 is substantially the same as that disclosed in United States Letters Patent 5,004,154 entitled High Pressure Fuel Injection Device For Engine, issued April 2, 1991 and assigned to the assignee hereof.

In addition to the improved fuel control permitted by the use of the two solenoids 125 and 115, an arrangement is also incorporated for controlling the pressure of the fuel supply to the injector 45 to still further improve the operation of the total fuel injection system. As has been previously noted, the pressure relief valve 46 is provided for this purpose and the construction and operation of this valve will now be described by particular reference to Figures 2 through 4.

The pressure release valve 46 includes a bore 131 formed in the plunger housing 59 into which a valve seat element 132 is positioned. A nut 133 has a threaded connection 134 with the plunger housing 159 to maintain an O ring seal 135 at the end of the seat member 132 into sealing engagement with the plunger housing 59.

A passageway 136 is formed in the plunger housing 59 for communicating the pressure chamber 42 on the upstream side of the filter 43 with a valve opening 137 formed in the valve seat member 132. A ball type valve element 138 is slidably supported within a bore 139 formed of the valve seat member 132 and normally closes the valve opening 137. A piston member, indicated generally by the reference numeral 141 has a cylindrical portion 142 that is slidably supported within the bore 139 and which has a tip portion that engages the ball 138 and will hold it in a seated position, under conditions to be described.

The piston number 141 has a larger diameter portion 143 that is received in a larger diameter bore 144 formed in a closure member 145 that is fixed suitably to the plunger housing 59. The smaller diameter portion 142 of the piston member 141 has a through bore 146 that communicates with a chamber 147 formed at the upper end of the bore 145. Ports 148 extend through the tip of the smaller diameter piston portion 142 to communicate the bore 139 with the bore 146 and chamber 147 when the ball valve 138 is open.

High pressure fuel has been admitted to the relief valve 46 by opening of the ball valve 138 will exert a pressure in the chamber 147 on the larger diameter portion 143 of the piston 146 so as to force it downwardly to move the ball valve 138 to its closed position. Hence, pressure is then maintained in the system. In order to reduce the pressure, a solenoid operated valve 47, now to be described, is provided for selectively dumping the pressure in the chamber 147 to atmosphere so as to reduce the pressure of fuel in the high pressure chamber 42 and, accordingly, the pressure of the fuel delivered to the injector 45.

A further chamber is formed by a bore 149 in the closure piece 145. This bore is closed by a valve seat member 151 that carries an O ring seal 152 that surrounds a communication passageway 153 extending from the piston chamber 147 to the bore 149. The valve seat member 151 has a relief passageway 154 that communicates with the passageway 153.

The valve seat member 151 is held in position by a yoke 155 of the solenoid 47 which is, in turn, held in place by a cover piece 156 that is secured to the closure member 145 by a nut 157. The solenoid 47 has a winding 158 that surrounds a core 159 which, in turn, has a bore 161 that receives a plunger 162 of an armature 163. The armature 163 engages a ball type valve 164 to hold the valve port 154 in its closed position. A leaf type spring 165 engages the armature plunger 162 for holding the valve 164 in its closed position.

When the solenoid winding 158 is energized, the armature 163 will be drawn upwardly and fuel pressure in the passage 153 and bypass passage 154 will unseat the ball check valve 164 and permit fuel flow through ports formed in the yoke 155 to a chamber 166 formed by the cover piece 156. A fuel return fitting 167 communicates with the return conduit 52 for returning the fuel back to the fuel tank 33 so as to reduce the pressure in the chamber 42 and, accordingly, the fuel supplied to the injector 45.

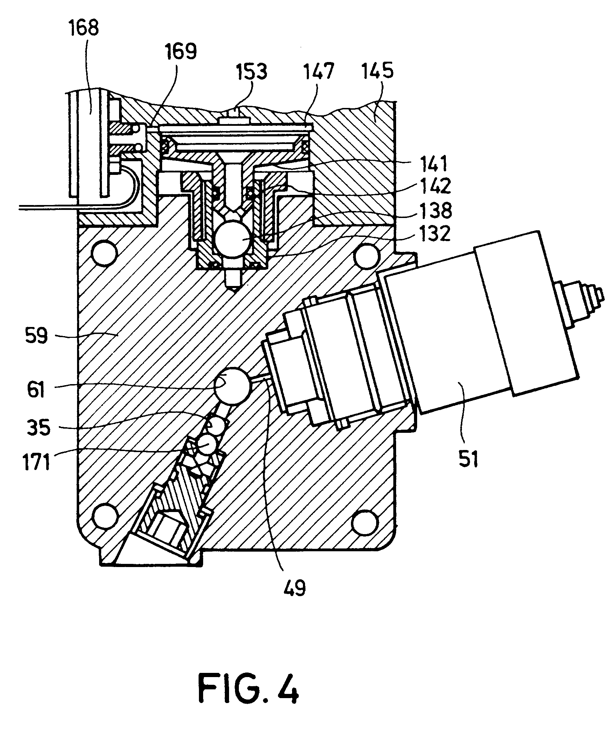

The pressure generated by the plunger 37 is employed to determine when the solenoid 47 should be operated to open the relief valve 46. For that purpose, there is provided a pressure sensor 168 (Figure 4) that communicates with the plunger bore 61 through a small orifice 169. As seen in this figure, a ball type check valve 171 is provided in the conduit 35 that connects the low pressure chamber 58 with the plunger bore 61. This check valve 171 insures that pressure from the action of the plunger 37 will not be dissipated back into the low pressure chamber 58.

The output pressure from the pressure sensor 168 is transmitted to the CPU 48 so as to determine when the conditions are such that the pressure should be relieved. This is determined in a manner which will be described and when the pressure is to be relieved, the solenoid winding 158 is energized to permit the ball valve 164 to open and reduce the pressure in a chamber 147 to cause the piston 141 to move upwardly unseating the ball valve 138 and relieving the pressure generated by the plunger 37 in the bore 61. This will reduce the pressure transmitted to the high pressure chamber 42. Reduced pressure in the chamber 42 will reduce the pressure of fuel supplied to the injector 45, and, accordingly, the amount of fuel injected by the injector 45 during its operation.

The pressure relief valve 46 has a differential area between the high pressure area defined by the valve opening 137 and the bore 139 and between the bore 139 and the larger bore 144 that permits the control of high pressure with low pressure components. That is the pressure sensor 168 and solenoid 47 and valve 164 can operate at lower pressures than the actual pressure controlled.

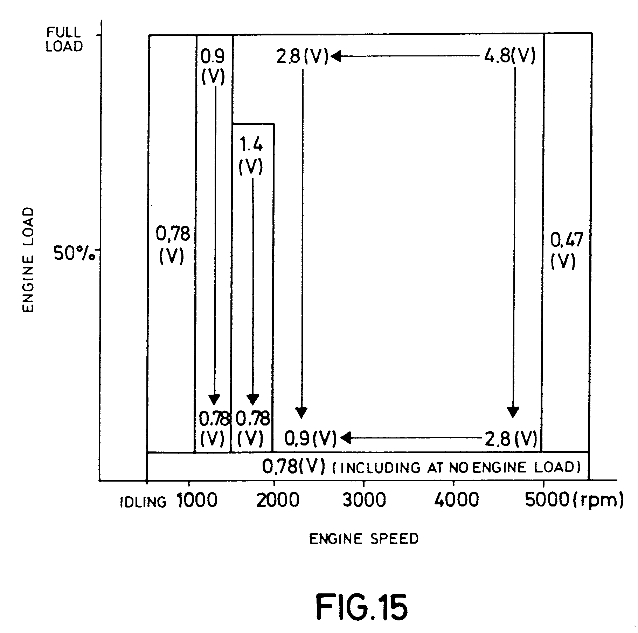

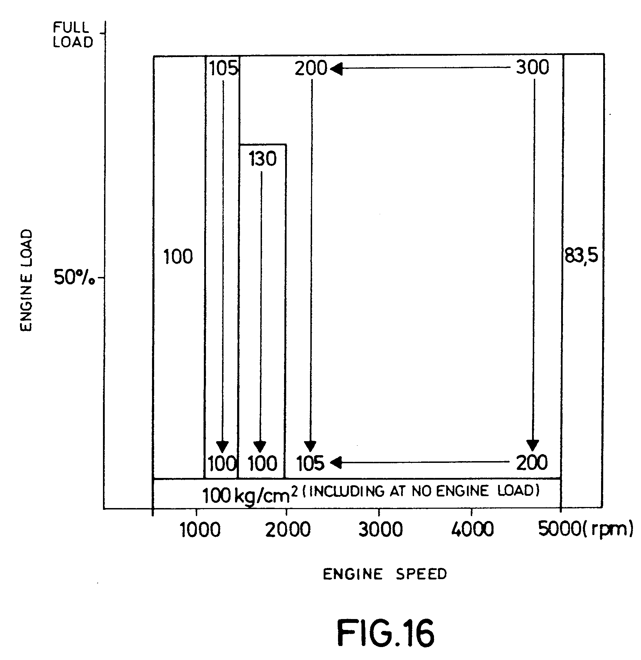

As has been noted, the CPU 48 determines the conditions under which the relief valve 46 should be operated so as to reduce the fuel pressure supplied to the fuel injector 45. A map is generated in the CPU 48 for this purpose and this map is based upon voltage signals comprised of the voltage output from the pressure sensor 168 and the voltage to be applied to the winding 158 so as to reduce the pressure. Figure 15 is a graphical view showing the voltage signal necessary to provide the desired fuel flow and Figure 16 shows the amount of fuel flow required, both curves being related to engine speed and engine load. It will be seen from these figures that the reference voltage varies within the range of 0.47 volts to 4.8 volts and then the fuel pressure supplied to the fuel injector 45 will vary in the range of 83.5 kilograms per square centimeter to 300 kilograms per square centimeter.

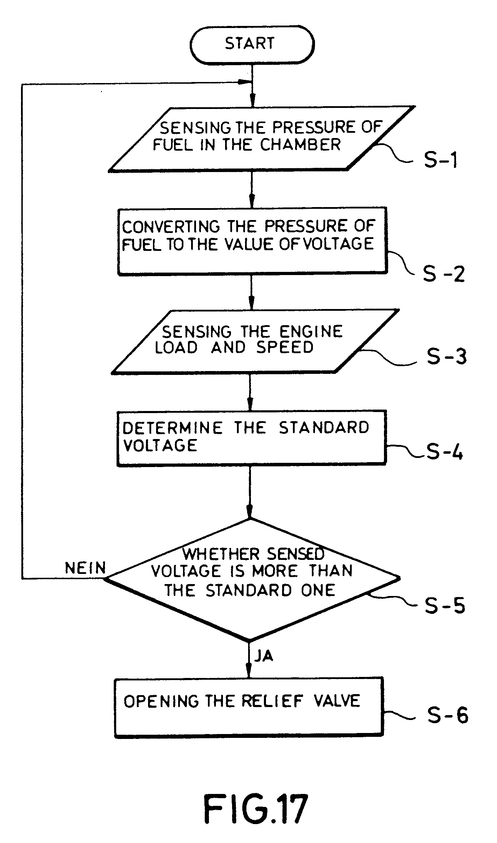

Basically, the way CPU 48 achieves the desired pressure is to have a map of reference voltages indicating the appropriate pressure for a given engine running condition, such as load and speed. This reference voltage $V_2$ is then compared with the voltage $V_1$ representing actual fuel pressure and if the actual fuel pressure is higher than the reference voltage, the winding 158 is energized so as to reduce the pressure. The control routine is as shown in Figure 17 wherein the program starts and then moves to the step S1 so as to sense the actual fuel pressure in the plunger bore 61 by the output signal from the pressure sensor 168. This signal is then converted at the step S2 to a voltage value. The program then moves to the step S3 so as to determine the actual engine speed and engine load and then output the standard $V_2$ at the step S4.

The program then moves to the step S5 to determine whether the $V_1$ is greater than the standard or required voltage $V_2$. If it is, the program moves to the step S6 so as to energize the winding 158 and open the relief valve 46 to drop the pressure. If at the step S5, however, it is determined that the pressure is not greater than the standard reference pressure, the program repeats.

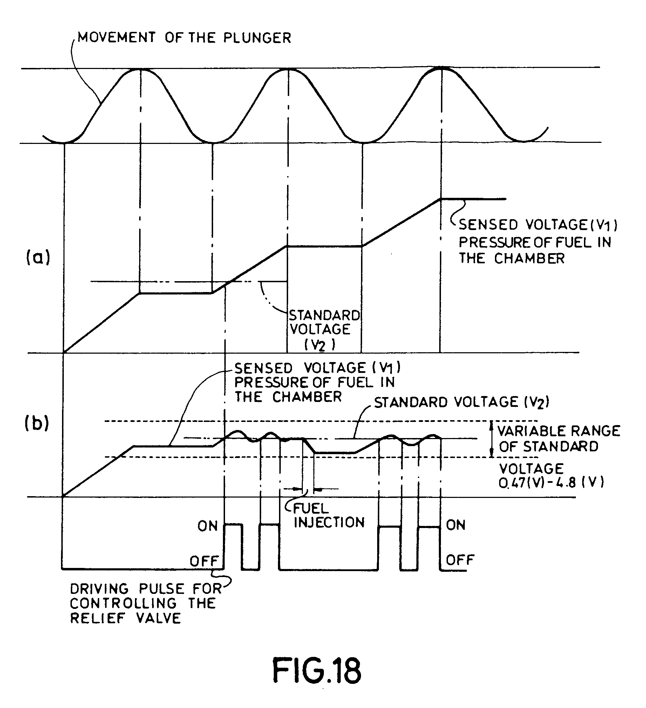

Figure 18 is a graphical view showing the movement of the plunger 37, the relationship of the movement of the plunger 37 and the sensed voltage V1 and its relationship to the desired voltage $V_2$. The curve B shows the relationship during the control operation. As may be seen, when the sensed voltage exceeds the reference voltage, a pulse is generated for driving the relief valve and the pressure will then fall. When the pressure falls below the standard voltage $V_2$, then the relief valve 46 is denergized until the pressure again raises above the reference voltage $V_2$ so as to require the energization of the winding 158 and opening of the relief valve 46 again. It will be seen also that when the injector 45 injects, the fuel pressure will drop and during this time the relief valve 46 will again be shut off.

Therefore, it should be readily apparent that the described arrangement is very effective in controlling the amount of fuel discharge not only by the use of the controlled fuel injector 45 but by regulating the pressure of the fuel supplied to the fuel injector 45. As a result, extremely good running conditions can be achieved.

With the construction as thus far described, extremely good fuel injection control is provided. Engine running can be stabilized under all conditions due to the use of the pressure regulator including the relief valve 46 and its control, as has been previously described. Under some conditions, however, the necessity to generate full pressure before the relief valve is opened can produce high driving loads and reduce the power output of the engine. Therefore, there are certain conditions where it may be desireable to further limit the maximum pressure developed by the pump. However, there becomes a danger when such a pressure limiting arrangement is employed. If the pressure limiting arrangement becomes inoperative and acts to prevent the generation of pressure, then the fuel injector will not be supplied with adequate fuel to provide running under any condition. Thus, it is desirable to provide a greater fuel pressure during starting and also at maximum load condition.

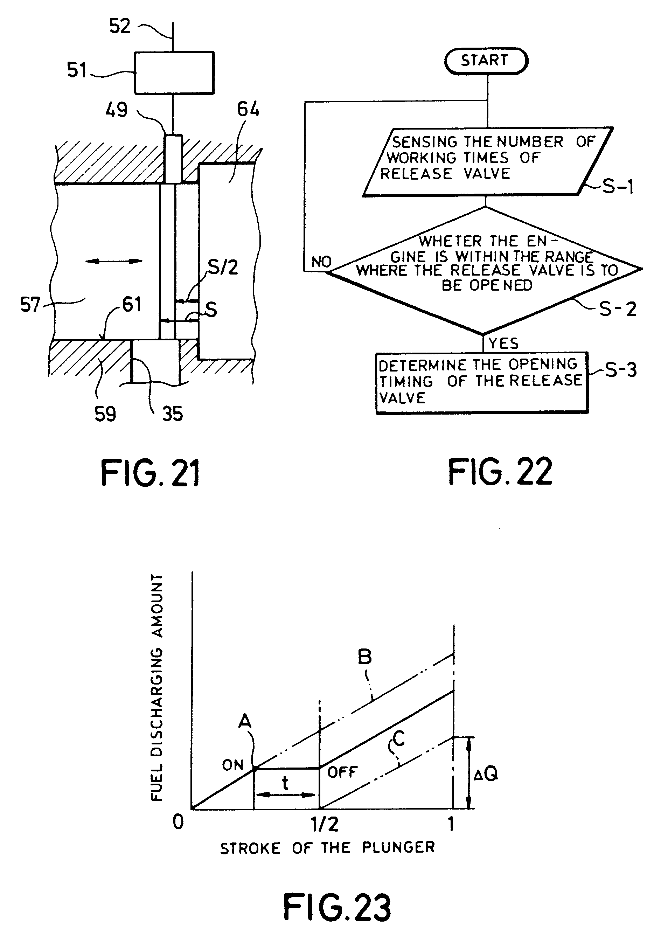

Therefore, there is provided a further release system, shown in most detail in Figure 21 that is effective to reduce the pressure and yet even in the event of some failure still adequate fuel pressure would be supplied. Referring now to Figure 21 will be seen that the plunger body 59 is provided with the aforenoted release passage 49 that intersects the bore 61 at a point $S/_2$ below the top dead center stroke S of the plunger 57. The release passage 49 also appears partially in phantoms lines in Figure 2 and in Figure 1 to show the orientation relative to the entire mechanism. The release passage 49 is generally positioned at a location which is approximately of one half of the stroke S of the plunger 57.

The release passage 49 communicates with the fuel pressure return line 52 and this communication is controlled by the aforementiond release valve 51 which may be of any known type and generally comprises an on/off valve. The release valve 51 is normally operated by the CPU 48 so as to be closed during starting of the engine and at the time the engine reaches maximum speed and maximum torque. In conditions other than this, the CPU 48 determines the number of pulses that are generated to the solenoid 47 to open and close the relief valve 46 and if this number of openings indicates that more pressure relief is required, the release valve 51 is open so as to further reduce the pressure. A map can be generated to provide this operation.

The CPU 48 then works in the routine shown in Figure 22 to move to the step S1 to sense the number of times the solenoid 47 has been energized within a given time period. A comparison is then made at the step S2 to determine whether the operation is such that opening of the release valve is required and if it is in this time period the program moves to the step S3 to determine the time of opening of the release valve 51 to obtain the desired pressure reduction.

The effect of the opening of the valve 51 is shown in Figure 23 wherein the fuel discharge amount in relation to the stoke of the plunger is depicted. At a time T when it is determined to open the release valve 51, the pressure build up will be stopped and once the plunger moves past the release opening 149 the pressure will then build up again so that the pressure will follow the solid line curve than the curve B which would exist when the release valve 51 will not open. The curve C shows that even if the release valve 51 malfunctions and stays open at all times, the plunger 37 will still generate some pressure due to the positioning of the port 175 and a quantity of fuel Q will still be delivered to the injector 45 so as to insure that the engine will run adequately.

Therefore, the release valve 51 is useful in avoiding the generation of unnecessarily high pressures in the pumping system and will reduce the power required to drive the fuel pump and specifically the high pressure pump 36.

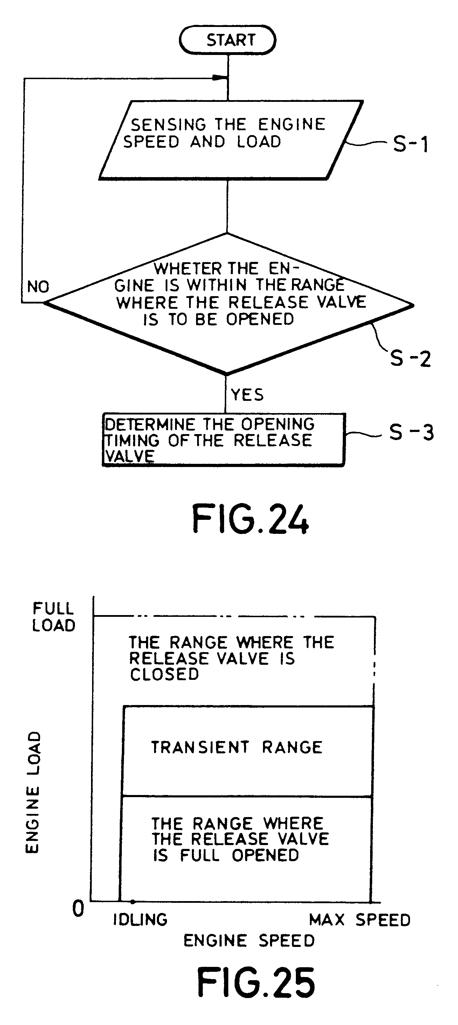

Figures 24 and 25 show a different type of control routine for the release valve which does not require the sensing of the number of pulsations of the actuation of the relief valve 46. In this embodiment, the CPU 48 is programmed so as to sense the running condition of the engine when opening the release valve 51 would be desirable. In accordance with this program, once the system starts it moves to the step S1 where the CPU 48 calculates engine and speed and load. The program then moves to the step S2 to determine if the release valve 51 should be opened and if so, moves to the step S3 so as to actually open the release valve 51 and set the timing of its opening.

The relationship of the opening of the release valve relative to engine speed and load is depicted in Figure 25.

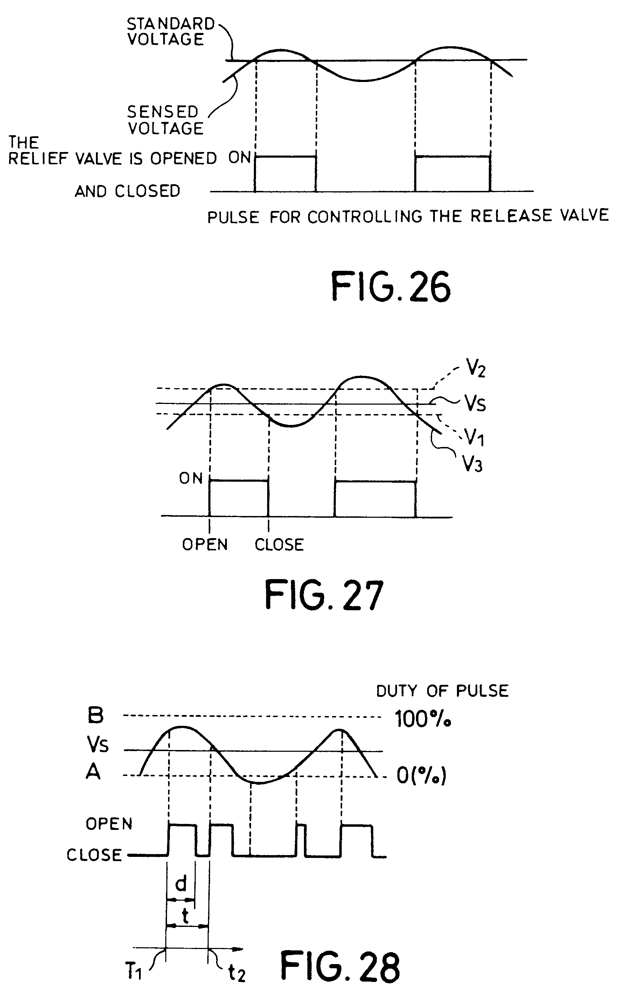

Figures 26 and 27 show another arrangement for operating the pressure relief valve 46. In this embodiment, the voltage pulses for generating the operation of the relief valve 46 by energizing the solenoid 47 are substantially the same as depicted in Figure 18. However, as shown in Figure 27 the actual effect of hysterisis is shown that indicates the delay in actual opening and closing of the valve due to the hysterisis in the system. The solenoid 47 is energized at a point when the sensed voltage $V_3$ is greater than the predetermined value $V_2$ and deenergized when the sensed voltage $V_3$ is less than the predetermined valve $V_1$. A merit of this embodiment is to be able to descrease the operation of the solenoid 47. Therefore, it has a good effect on decreasing of wearing of moving parts.

Another method of control is shown in Figure 28. In this method, voltage is not sensed continuously as in the previous embodiments. Also pressure is controlled by varying the duty cycle of the solenoid 47. The pressure (voltage) is sensed at two times T, and $t_2$ spaced from each other by the time period T.

It should be readily apparent from the foregoing description that the described embodiments of the invention provide an extremely effective fuel injection system wherein the amount of fuel supply can be very accurately controlled. In addition, this control is achieved in such a way as to insure maximum power output.

**Claims**

1. A high pressure fuel injection system for an internal combustion engine comprising a fuel injector (45), a plunger type high pressure fuel injection pump (36), a conduit means (61,42,44) interconnecting said high pressure fuel injection pump (36) with said fuel injector (45) for delivering fuel thereto via a delivery check valve (63), a control unit (48) for controlling fuel injection, a pressure sensor means (168,169) for detecting fuel pressure prevailing in said conduit means (61,42,44) and means including a fuel return arrangement for reducing the pressure in said conduit means (61,42,44) **characterised in that** a first pressure-reducing valve (46) is provided controlling a relief passageway (136) branching off from said conduit means (61,42,44) downstream of the delivery check valve (63) and a second pressure-reducing valve (51) controlling another release passage (49) of the conduit means (61,42,44) is provided branching off from a bore (61) which slideably receives a plunger (37) of the high pressure fuel injection pump (36) at a point intermediate the ends of the stroke of the plunger (37), said first and second pressure-reducing valves (46,51) being operated in response to engine running characteristics by means of said control unit (48).

2. A high pressure fuel injection system as claimed in Claim 1, **characterized in that** said first and second pressure-reducing valves (46,51) are solenoid valves which are actuated in response to the results of the comparison between a sensed fuel pressure detected by the pressure sensor means (168, 169) and an optimum fuel pressure stored in a memory means of the control unit (48) and being characteristic for certain engine running conditions such as certain values of engine load and/or engine speed.

3. A high pressure fuel injection system as claimed in Claims 1 or 2, **characterized in that** the plunger-type high pressure fuel injection pump (36) is contained in a housing assembly (54) accommodating a low pressure fuel delivery pump (32), a part of the conduit means (61,42,44) including an accumulator pressure chamber (42) and both pressure-reducing valves (46,51) also.

4. A high pressure fuel injection system as claimed in at least one of the preceding Claims 1 to 3, **characterized in that** said both pressure-reducing valves (46,51) form components of first and second fuel return circuits with both pressure-reducing valves (46,51) being disposed in parallel lines.

5. A high pressure fuel injection system as claimed in Claims 3 to 4, **characterized in that** said accumulator pressure chamber (42) is disposed downstream of the high pressure chamber of the high pressure fuel injection pump (36) and that said relief passage way (136) controlled by the first pressure-reducing valve (46) branching off from said accumulator pressure chamber (42).

6. A high pressure fuel injection system as claimed in at least one of the preceding Claims 3 to 5, **characterized in that** the first pressure-reducing valve (46) comprises a pressure converting piston (141) operated by a ball-type check valve (132,137,138) which is subject to fuel pressure prevailing in the accumulator pressure chamber (42) of the conduit means (42,44) converting said high pressure into a low pressure prevailing in a low pressure chamber (147) downstream of said piston (141), and that the pressure sensor means (168, 169) is disposed to be subject to said low pressure prevailing in low pressure chamber (147) and sensing said low pressure as a representative of the high pressure prevailing in the conduit means (42, 44).

7. A high pressure fuel injection system as claimed in Claim 6, **characterized in that** said piston (141) has a cylindrical upstream portion of smaller diameter (142) which is slideably received within a bore (139) of smaller diameter also accommodating the valve ball (138) and has a downstream larger diameter portion (143) slideably received in a larger diameter bore (144) formed in a closure member (145), said piston (141) having a longitudinal through-bore (146) that communicates the low pressure chamber (147) formed at the downstream side of the piston (141) with the high pressure accumulator pressure chamber (42) at the upstream side of the piston (141) when the first pressure-reducing valve

10

(46) is open.

8. A high pressure fuel injection system as claimed in at least one of the preceding Claims 1 to 4, **characterized in that** a further fuel pressure return system is provided through each injector (45).

**Patentansprüche**

1. Hochdruck-Kraftstoffeinspritzsystem für eine Brennkraftmaschine, mit einer Kraftstoffeinspritzdüse (45), einer Hochdruck-Kraftstoffeinspritzpumpe (36) vom Kolbentyp, einer Leitungseinrichtung (61, 42, 44), die die Hochdruck-Kraftstoffeinspritzpumpe (36) mit der Einspritzdüse (45) zur Zuführung von Kraftstoff zu dieser über ein Zuführungsregulierventil (63) verbindet, einer Steuereinheit (48) zur Steuerung der Kraftstoffeinspritzung, einer Drucksensoreinrichtung (168, 169) zur Erfassung des Kraftstoffdruckes, der in der Leitungseinrichtung (61, 42, 44) herrscht, und einer Einrichtung einschließlich einer Kraftstoffrückführanordnung zur Verminderung des Druckes in der Leitungseinrichtung (61, 42, 44), **dadurch gekennzeichnet**, daß ein erstes Druckreduzierventil (26) vorgesehen ist, das einen Entlastungskanal (136) steuert, der von der Leitungseinrichtung (61, 42, 44) stromab des ZuführungsregulierventileS (63) abzweigt und ein zweites Druckreduzierventil (51) vorgesehen ist, das einen weiteren Entlastungskanal (49) der Leitungseinrichtung (61, 42, 44) steuert, der von einer Bohrung (61) abzweigt, die gleitbar einen Kolben (37) der Hochdruck-Kraftstoffeinspritzpumpe (36) aufnimmt, wobei die Abzweigung an einem Punkt zwischen den Enden des Hubes des Kolbens (37) erfolgt, und wobei das erste und zweite Druckreduzierventil (46, 41) in Abhängigkeit von Motorlaufcharakteristika durch die Steuereinheit (48) betätigt sind.

2. Hochdruck-Kraftstoffeinspritzsystem nach Anspruch 1, **dadurch gekennzeichnet**, daß das erste und zweite Druckreduzierventil (46, 51) Magnetspulenventile sind, die in Abhängigkeit von den Ergebnissen des Vergleiches zwischen dem erfaßten Kraftstoffdruck, erfaßt durch die Drucksensoreinrichtung (168, 169), und einem optimalen Kraftstoffdruck, der in einer Speichereinrichtung der Steuereinheit (48) gespeichert ist, und charakteristisch ist für bestimmte Motorlaufbedingungen, wie z.B. bestimmte Werte der Motorbelastung und/oder der Motordrehzahl, betätigt werden.

3. Hochdruck-Kraftstoffeinspritzsystem nach Anspruch 1 oder 2, **dadurch gekennzeichnet**, daß die Hochdruck-Kraftstoffeinspritzpumpe (36) vom Kolbentyp in einer Gehäuseanordnung (54) aufgenommen ist, die auch eine Niederdruck-Kraftstoffzuführungspumpe (32), einen Teil der Leitungseinrichtung (61, 42, 44) einschließlich einer Drucksammelkammer (42) und beide Druckreduzierventile (46, 51) enthält.

4. Hochdruck-Kraftstoffeinspritzsystem nach zumindest einem der vorhergehenden Ansprüche 1 bis 3, **dadurch gekennzeichnet**, daß beide Druckreduzierventile (46, 51) Teile eines ersten und eines zweiten Kraftstoffrückführkreises bilden, wobei beide Druckreduzierventile (46, 51) in parallelen Leitungen angeordnet sind.

5. Hochdruck-Kraftstoffeinspritzsystem nach Anspruch 3 bis 4, **dadurch gekennzeichnet**, daß die Drucksammelkammer (42) stromab der Hochdruckkammer der Hochdruck-Kraftstoffeinspritzpumpe (36) angeordnet ist und daß der Entlastungskanal (136), gesteuert durch das erste Druckreduzierventil (46), von der Drucksammelkammer (42) abzweigt.

6. Hochdruck-Kraftstoffeinspritzsystem nach zumindest einem der vorhergehenden Ansprüche 3 bis 5, **dadurch gekennzeichnet**, daß das erste Druckreduzierventil (46) einen Druckwandlerkolben (141) aufweist, betätigt durch ein Rückschlagventil (132, 137, 138) vom Kugelventiltyp, das dem Kraftstoffdruck, der in der Drucksammelkammer (42) der Leitungseinrichtung (42, 44) unterworfen ist, und das den hohen Druck in einen niedrigen Druck umwandelt, der in einer Niederdruckkammer (147) stromab des Kolbens (141) herrscht, und daß die Drucksensoreinrichtung (168, 169) angeordnet ist, um dem niedrigen Druck, der in der Niederdruckkammer (147) herrscht, ausgesetzt zu werden und diesen niedrigen Druck als einen Repräsentant des hohen Druckes, der in der Leitungseinrichtung (42, 44) herrscht, erfaßt.

7. Hochdruck-Kraftstoffeinspritzsystem nach Anspruch 6, **dadurch gekennzeichnet**, daß der Kolben (141) einen zylindrischen stromaufseitigen Teil von kleinerem Durchmesser (142) aufweist, der gleitbar in einer Bohrung (139) von kleinerem Durchmesser, die auch das Kugelventil (138) aufnimmt, aufgenommen ist, und einen stromabseitigen Teil (143) mit größerem Durchmesser aufweist, der gleitbar in einer Bohrung (144) mit größerem Durchmesser aufgenommen ist, die in einem Verschlußteil (145) ausgebildet ist, wobei der Kolben (141) eine Längs-Durchgangsbohrung (146) aufweist, die die Niederdruckkammer (147), gebildet auf der stromabseitigen Seite des Kolbens (141) mit der Hochdruck-Sammeldruckkammer (42) an der stromaufseitigen Seite des Kolbens (141) verbindet, wenn das erste Druckreduzierventil (46) offen ist.

8. Hochdruck-Kraftstoffeinspritzsystem nach zumindest einem der vorhergehenden Ansprüche 1 bis 4, **dadurch gekennzeichnet**, daß ein weiteres Kraftstoffdruck-Rückführungssystem durch jede Einspritzdüse vorgesehen ist.

## Revendications

1. Système d'injection de carburant à haute pression pour moteur à combustion interne, comprenant un injecteur (45) de carburant, une pompe (36) d'injection de carburant à haute pression du type à piston, un moyen (61, 42, 44) à conduit reliant ladite pompe (36) d'injection de carburant à haute pression audit injecteur (45) de carburant pour lui fournir du carburant par l'intermédiaire d'une soupape (63) de retenue, une unité (48) de commande pour commander l'injection de carburant, un moyen (168, 169) détecteur de pression pour détecter la pression de carburant régnant dans ledit moyen (61, 42, 44) à conduit et un moyen comportant un dispositif de retour de carburant pour réduire la pression dans ledit moyen (61, 42, 44) à conduit,

caractérisé en ce qu'une première soupape (46) de réduction de pression est prévue pour commander un passage (136) de surpression partant dudit moyen (61, 42, 44) à conduit vers l'aval du clapet (63) de retenue d'alimentation et une seconde soupape (51) de réduction de pression est prévue pour commander un autre passage (49) de surpression du moyen (61, 42, 44) à conduit, partant d'un alésage (61) qui reçoit de façon coulissante un piston (37) de la pompe (36) d'injection de carburant à haute pression en un point intermédiaire entre les extrémités de la course du piston (37), lesdites première et deuxième soupapes (46, 51) de réduction de pression étant actionnées en réponse à des caractéristiques de fonctionnement du moteur au moyen de ladite unité (48) de commande.

2. Système d'injection de carburant à haute pression selon la revendication 1, caractérisé en ce que lesdites première et deuxième soupapes (46, 51) de réduction de pression sont des électrovannes qui sont actionnées en réponse aux résultats d'une comparaison entre une pression de carburant détectée par le moyen (168, 169) détecteur de pression et une pression de carburant optimale stockée dans un moyen à mémoire de l'unité (48) de commande et étant caractéristique de certaines conditions de fonctionnement du moteur telles que certaines valeurs de la charge du moteur et/ou de la vitesse du moteur.

3. Système d'injection de carburant à haute pression selon la revendication 1 ou 2, caractérisé en ce que la pompe (36) d'injection de carburant à haute pression du type à piston est contenue dans un boîtier (54) recevant une pompe (32) d'alimentation en carburant à basse pression, une partie du moyen (61, 42, 44) à conduit comportant une chambre (42) à accumulation de pression et les deux soupapes (46, 51) de réduction de pression.

4. Système d'injection de carburant à haute pression selon l'une quelconque des revendications 1 à 3, caractérisé en ce que lesdites deux soupapes (46, 51) de réduction de pression sont des éléments d'un premier et d'un deuxième circuits de retour de carburant, les deux soupapes (46, 51) de réduction de pression étant disposées dans des canalisations parallèles.

5. Système d'injection de carburant à haute pression selon l'une quelconque des revendications 3 à 4, caractérisé en ce que ladite chambre (42) à accumulation de pression est disposée en aval de ladite chambre à haute pression de la pompe (36) d'injection de carburant à haute pression et en ce que ledit passage (136) de surpression est commandé par la première soupape (46) de réduction de pression qui part de ladite chambre (42) à accumulation de pression .

6. Système d'injection de carburant à haute pression selon l'une quelconque des revendications 3 à 5, caractérisé en ce que la première soupape (46) de réduction de pression comprend un piston (141) de conversion de pression actionné par un clapet (132, 137, 138) de retenue du type à bille qui est soumis

12

à la pression de carburant régnant dans la chambre (42) à accumulation de pression du moyen (42, 44) à conduit convertissant ladite pression élevée en une pression faible régnant dans une chambre (147) à basse pression située en aval dudit piston (141), et en ce que le moyen (168, 169) détecteur de pression est disposé de façon à être soumis à ladite pression faible régnant la chambre (147) à basse pression, et à détecter ladite pression faible comme étant représentative de la pression élevée régnant dans le moyen (42, 44) à conduit.

7.  Système d'injection de carburant à haute pression selon la revendication 6, caractérisé en ce que ledit piston (141) présente une partie amont cylindrique de petit diamètre (142) qui est reçue de façon à pouvoir coulisser à l'intérieur d'un alésage (139) de plus petit diamètre recevant également la bille (138) de soupape et présente une partie (143) de grand diamètre située en aval qui est reçue de façon à pouvoir coulisser dans un alésage (144) de grand diamètre formé dans un élément (145) de fermeture, ledit piston (141) ayant un alésage (146) traversant longitudinal qui fait communiquer la chambre (147) à basse pression formée du côté aval du piston (141) avec la chambre (42) à accumulation de pression à haute pression du côté amont du piston (141) lorsque la première soupape (46) de réduction de pression est ouverte.

8.  Système d'injection de carburant à haute pression selon l'une quelconque des revendications 1 à 4 précédentes, caractérisé en ce qu'un autre système de retour de pression de carburant est prévu par l'intermédiaire de chaque injecteur (45).

FIG.1

EP 0 474 168 B1

FIG. 2

FIG.3

FIG. 4

FIG.5

FIG.6 FIG.7 FIG.8

FIG.9 FIG.10 FIG.11

FIG.12 FIG.13 FIG.14

19

FIG.15

FIG.16

FIG.17

MOVEMENT OF THE PLUNGER

(a)

SENSED VOLTAGE(V₁)
PRESSURE OF FUEL IN
THE CHAMBER

STANDARD
VOLTAGE
(V₂)

SENSED VOLTAGE (V₁)
PRESSURE OF FUEL IN
THE CHAMBER

STANDARD VOLTAGE (V₂)

(b)

VARIABLE RANGE
OF STANDARD

VOLTAGE
0.47(V)-4.8 (V)

FUEL
INJECTION

ON

OFF

ON

OFF

DRIVING PULSE FOR
CONTROLLING THE
RELIEF VALVE

# FIG.18

FIG.19

FIG.20

FIG. 21

FIG. 22

FIG.23

START

SENSING THE ENGINE
SPEED AND LOAD — S-1

WHETER THE EN-
GINE IS WITHIN THE RANGE
WHERE THE RELEASE VALVE
IS TO BE OPENED — S-2

NO

YES

DETERMINE THE OPENING
TIMING OF THE RELEASE
VALVE — S-3

## FIG.24

FULL
LOAD

THE RANGE WHERE THE
RELEASE VALVE IS
CLOSED

TRANSIENT RANGE

THE RANGE WHERE
THE RELEASE VALVE
IS FULL OPENED

ENGINE LOAD

0

IDLING

MAX SPEED

ENGINE SPEED

## FIG.25

FIG. 26

FIG. 27

FIG. 28